# EUROPEAN PATENT SPECIFICATION

(11) **EP 1 046 094 B1**
(45) Date of publication and mention of the grant of the patent: **19.10.2005**
(21) Application number: 99944569.5
(22) Date of filing: 31.08.1999
(51) Int. Cl.: G06F 1/00

(54) **CONTEXT SENSITIVE LOGIN SHIELD**
KONTEXTEMPFINDLICHER ANMELDUNGSSCHUTZ
PROTECTION CONTRE LES CONNEXIONS LOGIQUES EN FONCTION DES CONTEXTES

(30) Priority: 11.09.1998 US 151578
(43) Date of publication of application: 25.10.2000
(73) Proprietor: Koninklijke Philips Electronics N.V., 5621 BA Eindhoven (NL)
(72) Inventor: DE GREEF, Bart, L., NL-5656 AA Eindhoven (NL)
(74) Representative: Groenendaal, Antonius W. M.
(86) International application number: PCT/EP1999/006407
(87) International publication number: WO 2000/016180

(56) References cited:
- EP-A- 0 713 168
- US-A- 5 758 155
- US-A- 5 781 724
- PATENT ABSTRACTS OF JAPAN vol. 1996, no. 02, 29 February 1996 (1996-02-29) & JP 07 281874 A (FUJI PHOTO FILM CO LTD), 27 October 1995 (1995-10-27) & US 5 850 545 A (MATSUSHITA MASAHIRO) 15 December 1998 (1998-12-15)
- "FLEXIBLE SPECIFICATION OF DISTRIBUTED COMPUTING ENVIRONMENT SECURITY LOGIN" IBM TECHNICAL DISCLOSURE BULLETIN,US,IBM CORP. NEW YORK, vol. 38, no. 11, page 341 XP000547381 ISSN: 0018-8689

## Description

The invention relates to an access system for accessing a computer system and comprising:
- a login shield that allows the user to enter identification information, and provides access to the computer system based on the identification information.

The invention also relates to a method of controlling access to a computer system and comprising the steps of:
- entering identification information, and
- providing access to the computer system based upon the identification information.

The invention yet also relates to a program module for operation on a computer that, when operated on the computer, enables a user to specify identification information and provides access to the computer based on the identification information.

So, in other words, this invention relates to the field of computers, and in particular to the field of computer access security and networking.

Many computer and network operating systems provide a login shield that prevents unauthorized users from accessing the files and ancillary devices of the computer or network. Typically, a login shield prompts a user for a user name and an associated password. When both the name and password match one of the previously stored authorized name and password combinations, the user is granted access to a workspace that is associated with the authorized name. Until access is granted, the user is precluded access to the computer or network environment or options.

A user may have multiple workspace allocations on the computer or network. In general, the login shield directs the user access to either a fixed predetermined workspace, or to the last workspace that the user was in when the user terminated a prior access. Upon gaining access, the user may switch context by selecting an alternative workspace allocation.

The selection of a workspace effects a number of actions by the computer or network, to provide a context within which the user interacts with the computer or network. For example, if the workspace is a workspace that is customized for e-mail processing, the selection of that workspace may automatically initiate the dialing of a telephone to connect the user to a service provider, the execution of a mailbox application that creates links to in-box, out-box and other folders, the submission of an access request to a post office at the service provider, the transmission of messages in the out-box, the reception of messages from the post-office to the in-box, and so on. The selection of a software development workspace may initiate a number of programs designed to create trace files for tracking changes and other software management overhead functions. The initiation of a Windows® workspace effects the execution of each of the application programs that are contained in a Start Up directory.

Each time a new workspace is initiated, time and resources are used to install and execute the programs and tasks associated with establishing the workspace. Because a workspace must be established for the user to operate within the computer or network environment when the user is granted access, some time and resources are consumed, regardless of the user's intended context. In a Windows® login shield environment, for example, the user must wait until Windows® is loaded and executed, and must wait until Windows® then loads and executes each program in the Start Up directory.

A prior art access system and method are known from US 5,781,724, which discloses a method and system for integrating additional functionality into a login system. The login system generates an event, with a login extension, in response to a receipt of a notification of the event, providing additional functionality. This is done to allow a site to customize the login process, for example to execute a virus checking program each time a principal is successfully authenticated. A user at a workstation is unable to determine whether functionality provided by the login system is an inherent function of the login system or is provided by a registered login extension.

It is an object of this invention to minimize the delay time incurred when a user logs into a computer or network system. It is another object of this invention to minimize the initialization tasks required of a user upon login.

The access system according to the invention as defined in claim 1 is characterized in that the access system comprises:
- a context selector that allows a user to select one or more selected contexts from a plurality of contexts, and
- a workspace launcher, operably coupled to the context selector and the login shield, that establishes an initial workspace on the computer system based on the one or more selected contexts.

The method according to the invention as defined in claim 9 is characterized in that the method further comprises the steps of:
- before said providing step, selecting one or more selected contexts from a plurality of contexts, and
- after said providing step, establishing an initial workspace based upon the one or more selected contexts.

The computer program product according to the invention as defined in claim 10, for operation on a computer is characterized in that the computer program product, when operated on the computer, enables the user, before the access is provided, to select one or more selected contexts from a plurality of contexts and, after the access is provided, establishes an initial workspace based upon the one or more selected contexts.

These objects and others are achieved by providing context options within the login shield. At login, the user has the option to identify the context of the initial access. The login shield prompts the user for a name and password and compares the name and password to a set of authorized names and passwords. If a match is found, the selected context is provided by launching the workspace or set of workspaces associated with the selected context.

In a preferred embodiment, the user is provided a means to create and define alternative workspaces for selection at login. By allowing the user to define and select among alternative workspaces, the overhead associated with the login process can be minimized to that required for each desired user context.

Further embodiments of the invention are specified in the appended dependent claims.

### Brief Description of the Drawings:

FIG. 1 illustrates an example user interface to an access system in accordance with this invention.
FIG. 2 illustrates an example block diagram of an access system in accordance with this invention.
FIG. 3 illustrates an example flow diagram for effecting a computer access in accordance with this invention.
FIG. 4 illustrates an example flow diagram for effecting the launch of application programs in accordance with this invention.

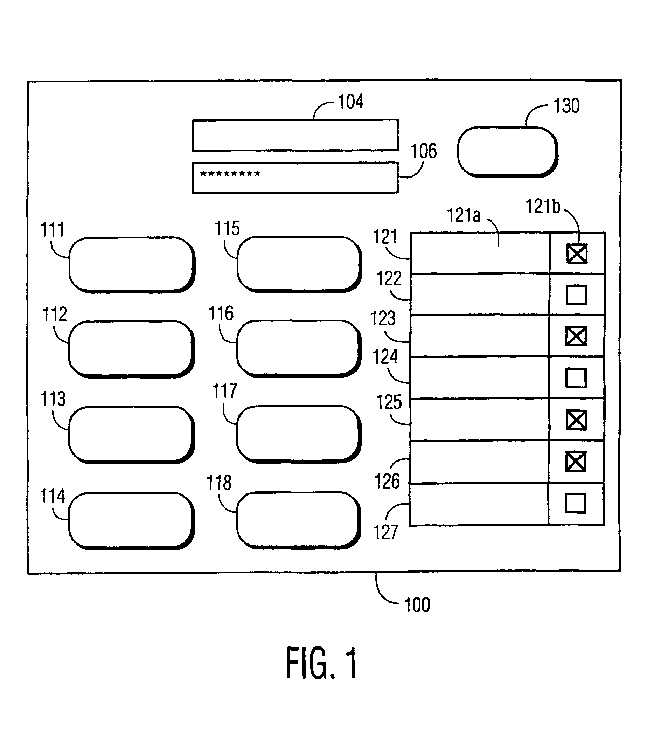

FIG. 1 illustrates an example user interface to an access system in accordance with this invention. This user interface is displayed on a screen 100 and allows a user (not shown) to select from among a variety of contexts 111-118 and application programs 121-127 during the login process. The user interface includes entry fields 104, 106 for receiving user identification information, such as the user's name and password. After providing the identification entries and selecting the context and applications that are to be initiated, the user submits a login access request by selecting the OK button 130. As would be evident to one of ordinary skill in the art, alternative selection schemes and options may be used to effect similar results. For example, to avoid redundant strokes, the selection of a context could automatically initiate the submission of the login access request, eliminating the need for the OK button 130. This alternative, however, assumes that only one context may be selected and requires that the context be selected after entering all the identification information and application selections. Alternatively, the options may be provided as lists, with a single click of a mouse button signaling a selection of an option, and a double click signaling a selection and automatic initiation of the login access request. Similarly, alternative means can be employed to provide the identification information, such as using a smart card, performing a biometric scan of fingerprints, and the like. Additional features may also be provided for ease of editing, or for additional security purposes.

In accordance with this invention, the access system will communicate the appropriate commands to request an access to a host computer system. Upon gaining access, the access system communicates the appropriate commands to establish the workspace environment corresponding to the selected context 111-118 and to initiate the execution of the selected application programs 121-127. In this manner, only the workspace and application programs that the user selects for a particular access request are established or initiated, thereby avoiding the delay time associated with the establishment or initiation of workspaces and programs that are not desired or required by the user at the time of access. The other, non-selected workspaces and applications may subsequently be selected in the conventional manner, as required.

In a preferred embodiment of this invention, the form, format, and content of the user interface is specific to each user, and controllable by each user. The access system presents the available context 111-118 and application program 121-127 options when the user name is provided, at 104. As is common in the art of user interfaces, the access system provides default entries and selections, so that the user need merely select the OK button 130 to login, if the default selections are desired.

In the example interface of FIG. 1, the user may choose any one of the contexts 111-118. Of particular note are the "continue previous" context 111, the "quick start" context 114, and the "general" context 118. The "continue previous" context 111 is the selection that establishes the last workspace that the user was in when the user terminated a prior access. The "quick start" context 114 establishes a minimal context, thereby minimizing the delay time to establish an initial login context. The "general" context 118 establishes a maximal context, providing a workspace context that includes most of the capabilities that the computer system offers, thereby minimizing the burden on the user of initiating common tasks. The other contexts 112, 113, 115-117 are contexts that are specific to a particular task, such as "word processing" 117, or "games" 116. In the word processing context 117, the suite of programs typically associated with word processing, such as a word processor, spelling checker, thesaurus, and the like are provided in the initial workspace upon login. In the games context, the available games will be provided in the initial workspace. The initial workspace may also include environment parameters suitable for each context, such as the screen resolution, the number of colors, the processing speed, and the like. The selection of a context may also determine the operating system that is used on the host computer, or the selection of a particular computer or computer configuration in a multiple computer environment. A context selection may also effect the establishment of a workspace that includes multiple other workspaces. For example, the "general" context 118 may establish a workspace that includes a word processing workspace, an e-mail workspace, and others. In like manner, multiple workspaces may be explicitly selected, for example, by selecting both the "games" 113 and "e-mail" 115 contexts before selecting the OK button 130.

In addition to a selection of contexts 111-118, the user is also provided a selection of application programs 121-127. These application programs 121-127 may be selected independent of the selection of a context. For example, FIG. 1 illustrates the selection of a clock application 121 via the affirmative check box 121b adjacent to the word "clock" 121a. Such an application may display, for example, the current time in a corner of the user's screen. In this example, the current time will be displayed in the corner of the user's screen regardless of the context 111-118 that is selected. Each of the applications 121-127 may also be specifically included in one or more of the contexts 111-118. For example, although the "Netscape" application 124 is not selected, the Netscape® application program may form a part of the "Web Surfing" context 112. If the "Web Surfing" context is selected, the Netscape® application program will be initiated, independent of the selection of the "Netscape" application 124. Other options could also be provided, such as an explicit identification of applications that are not to be launched, regardless of the context selection.

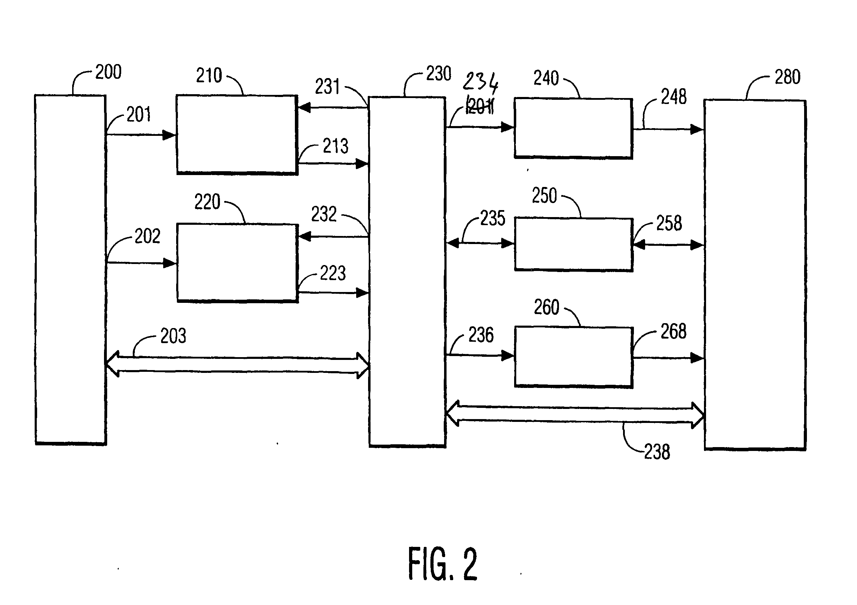

FIG. 2 illustrates an example block diagram of an access system in accordance with this invention. The access system grants a user 200 access to a computer system 280 via a login shield 230. The access system may be a part of a computer or network operating system; it may be an integral part of the computer system 280, or it may be an add-on access device. It could, for example be a television "set-top box" that is used to connect a user to the world wide web. The computer system 280 includes individual computing devices as well as networks of computing devices and processing equipment. In general terms, the access system is a component of an information processing system that allows a user access to the information or processing of that system.

In accordance with this invention, an application selector 210 and context selector 220 are provided to the user 200 on the user-side of the login shield 230. That is, the user 200 may use the application selector 210 and context selector 220 without first gaining access to the computer system 280. In the set-top box example, the selection of context and applications would be performed locally via the set-top box, without a connection to the world wide web. The login shield 230 receives the application program selection 213 from the application selector 210 and the context selection 223 from the context selector 220, but does not submit the commands 234, 235 to effect these selections until after the user 200 is granted access to the computer system 280. The login shield 230 functionality may be distributed between the site of the user, such as the user's set-top box, and the computer system 280, the world wide web. The login shield 230 may also effect the connection to a variety of computer systems 280, each having a particular means of effecting the login shield 230 functionality. For example, a set-top box may allow a user to access the world wide web, a local personal computer, or a network of other computing systems. The login shield 230 would include the components in the set-top box and in each of these systems that assure that the user is authorized to access each of these systems, as are commonly used in the field of computer access.

The user 200 provides identification information, such as a name and a password to the login shield 230 via communications link 203. Explicitly shown, for clarity, are communications links 201 and 202 for the user to effect the application and context selections 213, 223 respectively, although these links 201, 202, 203 would preferably be implemented as a single communications medium between the user 200 and the login shield 230. In a preferred embodiment, the application selection and context selection is specific to each user. Upon recognition of a particular user, either by default or by the entry of a user name, the login shield 230 provides the application options 231 and context options 232 to the application selector 210 and context selector 220, respectively. The application options 231 correspond to the example applications 121-127 of FIG. 1, and the context options 232 correspond to the example contexts 111-118. The user selects a context 223 from the context options 232 and identifies any applications 213 from the application options 231 that are to be executed together with the selected context 223.

If the provided identification information matches one of a list of authorized identifications, access to the computer system 280 is granted. Upon the granting of access, the login shield 230 launches the initial workspace or set of workspaces 236 that are associated with the selected context 223 via the workspace launcher 260. Thereafter, the login shield 230 launches the applications 234 corresponding to the selected applications 213, via the application launcher 240. Different reference numerals are used for the applications 213 from the application selector 210 and the applications 234 from the login shield 230 to indicate that the login shield may effect a translation of the "user names" of applications and "system names" of the same application. For example, a user name "WordPerfect" application 213 may be translated to system name application "WP8.exe" 234. Similarly, the selected context 223 may be translated to one or more workspace names 236. The workspace launcher 260 and application launcher 240 issue the appropriate commands 268 and 248 respectively to establish the workspace 236 and initiate the applications 234. In response to the commands 268 and 248 the computer system 280 is configured to provide the desired user context 223 with selected preloaded applications 213. Thereafter, the login shield 230 provides the user 200 access to the computer system 280 via the communication links 203 and 238.

Upon gaining access to the computer system 280, the user may create other contexts, or modify existing contexts, via the context editor 250. The context editor 250 assists the user in identifying the mappings between user selections 213 and 223 and the system commands 248 and 268 required to effect the selections 213 and 223, respectively. The context editor 250 communicates the newly created context option and associated workspaces 235 to the login shield 230 for presentation 232 to the user 200 at the next login session. In this manner, a user is provided the capability of specifying login procedures that effect optimized modes of the computer upon login, each mode being optimized with regard to the created context. A user of a portable computer containing an access system in accordance with this invention may specify contexts which effect different modes depending upon whether the portable computer is being used at home, in the office, or on the road. The selected mode will be effected upon login, thereby optimizing the login process as compared to the conventional technique of attempting to initialize a common workspace and then modifying it based upon the capabilities and components detected during this initialization process. The created contexts may also include other login information, such as the identification information required to gain access to the computer system 280, although this option obviates the security nature of the identification information.

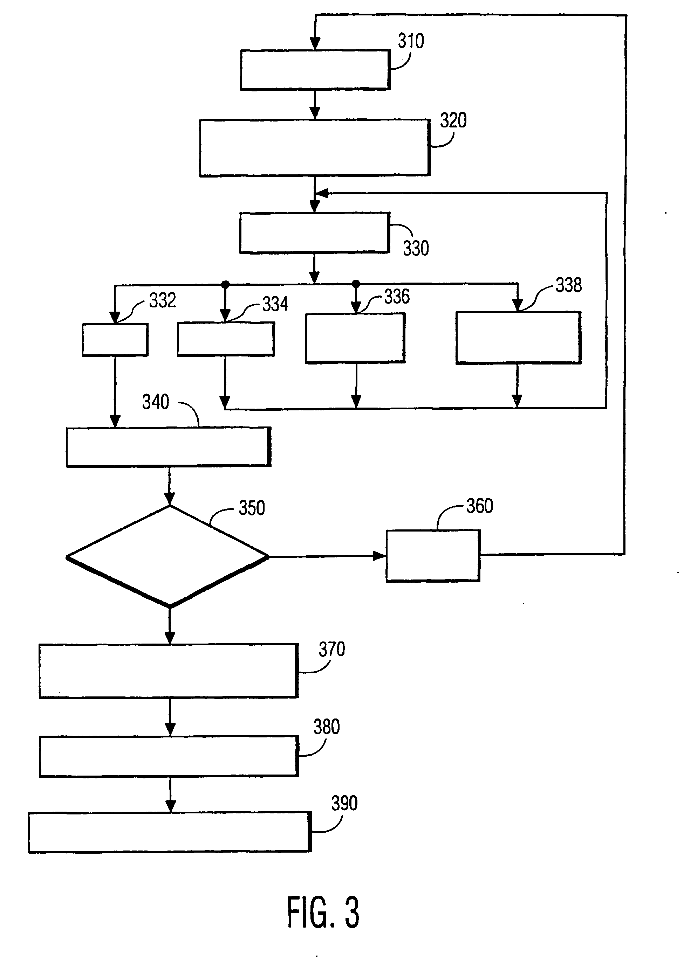

FIG. 3 illustrates an example flow diagram for effecting a computer access in accordance with this invention. The user initiates the interaction with the computer access system by providing a user name, at 310. In dependence upon the user name, the user is provided a set of contexts and application options from which to choose, at 320, using, for example, the screen layout of FIG. 1. As would be evident to one of ordinary skill in the art, other means of providing the options may also be used. For example, a common set of workspace and application options may be defined, and all users are provided this set; in this scenario, the options could be displayed before the user enters a name. Similarly, the user could belong to one or more groups or teams, each group or team having particular predefined contexts. The screen layout of FIG.1 could include an identification field for the group or team name, and the entry or selection of the name could effect a display of the options associated with the name. Also, a common workspace may be associated with all users or groups of users, and the options provided would merely include the application options; alternatively, the options provided may merely include context options.

The user interacts with the system at 330 and the computer access system processes the user input corresponding to a password at 334, a context selection at 336, or an application selection at 338. After processing each user input, the access system loops back to block 330 to accept additional user input. The user signals the completion of access input information and selection by an OK, at 332. In response to the OK at 332, the access system submits a login request 340 to the target system. If access is granted, at 350, the access system submits the appropriate commands to the target system at 370 to create the workspace or set of workspaces corresponding to the context selection at 336. The access system then submits the appropriate commands to the target system at 380 to initiate the applications corresponding to the application selection at 338. Thereafter, the access system provides the user access to the target system, at 390. If access is not granted, at 350, the access system performs the appropriate error response at 360, then returns to process the next user input at 310. The error response at 360 may include messages to the user, messages to a security system, and a barring of subsequent attempts based on the number of erroneous access attempts. As shown by the example flow chart of FIG. 3, by processing the user input and selections at 330-338 prior to requesting access at 340, only those actions necessary to establish the selected workspaces and applications, at 370 and 380, are performed before providing the user access to the system, at 390.

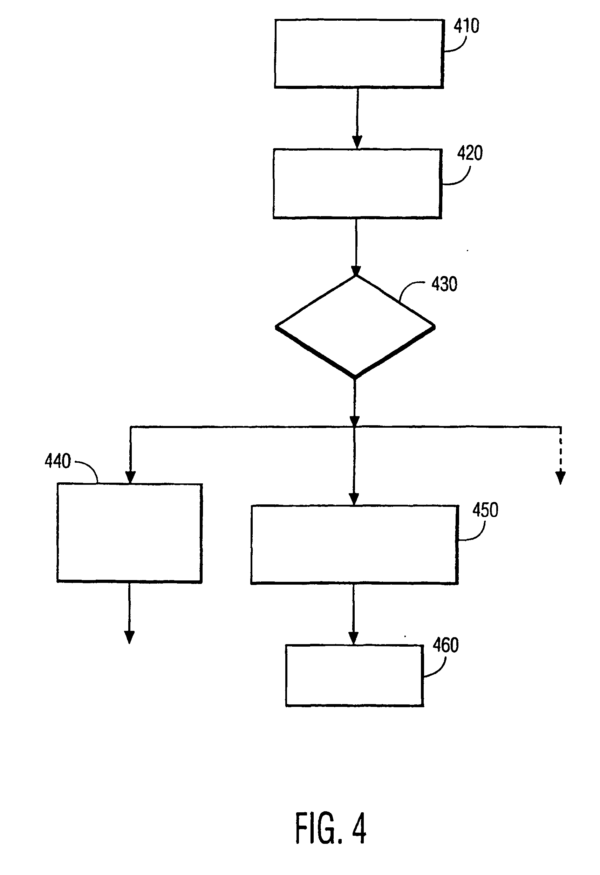

FIG. 4 illustrates an example flow diagram for effecting the launch of application programs in a Windows® environment in accordance with this invention. In this example, the user chooses, at 410, a context from among a selection of DOS, Windows®, or other contexts, and a start folder that contains references, or shortcuts, to applications that are to be initiated. In a DOS context, an autoexec file within the start folder will contain the name of each application program to be initially launched. In a Windows® context, the start folder explicitly contains the shortcut to each application. The access system validates access at 420 by comparing the user's identification information to a list of authorized users. Depending on the selected context, at 430, the access system processes the associated start folder differently. As is known in the art, when Windows® is launched, all applications that are located in the "Windows®\Start Menu\Programs\StartUp" folder are executed. Thus, the selection of a Windows® context at 410 is effected in a Windows® environment by replacing, at 450, the contents of the "Windows®\Start Menu\Programs\StartUp" folder with the contents of the associated start folder, and then launching Windows®, at 460. Similarly, the selection of a DOS context at 410 is effected by executing the autoexec file in the associated start folder, at 440. Methods of effecting the selection of context and application options and effecting the appropriate workspace and application commands in other environments would be evident to one of ordinary skill in the art in these other environments.

As would be evident to one of ordinary skill in the art, the particular partitioning of functions and options illustrated in FIGs. 1-4 are provided as examples only. The login shield 230, as well as all the other components 210, 220, 240, 250, 260, may be a part of a common computer system 280. Similarly, the user selection programs 210, 220, and the computer interface programs 240, 250, 260, may each be a part of a single login shield 230. Each of the components of FIG. 2 may be implemented as hardware, software, or a combination of both. For example, the login shield 230 may require a physical key device to initiate an access request, and the function of the login shield 230 may be implemented as a hardware switch device. The components of the access system may also be partitioned by removable and non-removable components. For example, the context and application options and selectors may be located in a removable disk or a smart card, and the access system is formed and activated by inserting the disk or card in a slot of the computer system. In like manner, the partitioning of context, workspace, and applications presented herein is somewhat arbitrary. A context includes the entire environment in which the user operates; this includes both the workspace and the applications running in that workspace. Similarly, the workspace includes the applications that create or effect that workspace. Consistent with this invention, the selection of a context may be effected by specifically selecting workspaces, applications, or a combination of both; the use of a context selection button merely eliminates the need to specifically select items at login.

Windows® is a registered trademark of Microsoft Corporation.
Netscape® is a registered trademark of Netscape Communications Corporation.

## Claims

1. An access system for accessing a computer system (280) and comprising:
- a login shield (230) that allows the user to enter identification information (104, 106),
**characterized in that** the access system further comprises:
- a context selector (220) that allows a user to select one or more selected contexts (223) from a plurality of contexts (232) before accessing said computer system, and
- said login shield providing access to the computer system (280) based on the identification information (104, 106), after the user has operated said context selector
- and a workspace launcher (260), operably coupled to the context selector (220) and the login shield (230), that establishes an initial workspace (236) on the computer system (280) based on the one or more selected contexts (223).

2. The access system of claim 1, **characterized in that** the access system further includes:
- an application selector (210) that allows the user to select one or more application programs (213) that are to be executed to facilitate the establishment of the initial workspace (236).

3. The access system of claim 1 or 2, **characterized in that** the access system further includes:
- a context editor (250) that allows the user to create one or more contexts (235) of the plurality of contexts (232).

4. The access system of claim 2, **characterized in that** the access system further includes an application launcher (240) that initiates execution of the one or more application programs (213).

5. The access system of claim 4, **characterized in that** the plurality of contexts (232) includes a Windows® context and the application launcher (240) effects the execution of the one or more application programs (213) by placing references to the one or more application programs (213) in a StartUp folder that is accessed when a Windows® workspace is established (460).

6. The access system of claim 1, **characterized in that** the identification information (104, 106) includes a user name (104) and an associated password (106).

7. A method of controlling access to a computer system (280) and comprising the steps of:
- entering (310, 330, 334) identification information (104, 106), and
- providing (340, 350) access to the computer system (280) based upon the identification information (104, 106),
**characterized in that** the method further comprises the steps of:
- before said providing step (340, 350), selecting (320, 336) one or more selected contexts (223) from a plurality of contexts (232), and
- after said providing step (340, 350), establishing (370) an initial workspace (236) based upon the one or more selected contexts (223).

8. The method of claim 7, **characterized in that** the method further includes the steps of:
- selecting (330, 338) one or more application programs (213) that are to be executed to facilitate the establishment of the initial workspace (236), and
- executing (380) each of the selected one or more application programs (213).

9. The method of claim 8, **characterized in that** the plurality of contexts (232) includes a Windows® context and the step of executing (380) each of the selected one or more application programs (213) includes the step of placing (450) references to the one or more application programs (213) in a StartUp folder that is accessed when a Windows® workspace is established.

10. A computer program product (220) for operation on a computer (280) that, when operated on the computer, enables a user to specify identification information and provides access to the computer based on the identification information, **characterized in that** the computer program product, when operated on the computer, enables the user, before the access is provided, to select one or more selected contexts (223) from a plurality of contexts (232) and, after the access is provided, establishes an initial workspace based upon the one or more selected contexts (223).

## Patentansprüche

1. Zugriffssystem zum Zugreifen auf ein Computersystem (280) und das die nachfolgenden Elemente umfasst:
- einen Anmeldungsschutz (230), der dem Benutzer die Möglichkeit bietet, Identifikationsinformation (104, 106) einzugeben, **dadurch gekennzeichnet, dass** das Zugriffssystem weiterhin die nachfolgenden Elemente umfasst:
- einen Kontextselektor (220), der einem Benutzer die Möglichkeit bietet, einen oder mehrere selektierte Kontexte (223) aus einer Anzahl Kontexten (232) zu selektieren, bevor auf das genannte Computersystem zugegriffen wird, und
- wobei der genannten Anmeldungsschutz Zugriff auf das Computersystem (280) schafft, und zwar auf Basis der Identifikationsinformation (104, 106), nachdem der Benutzer den Kontextselektor betätigt hat, und
- einen Arbeitsraumwerfer (260), der mit dem Kontextselektor (220) und dem Anmeldungsschutz (230) wirksam gekoppelt ist, wodurch auf Basis des einen oder auf Basis von mehreren selektierten Kontexten (223) ein Ausgangsarbeitsraum (236) in dem Computersystem (280) geschaffen wird.

2. Zugriffssystem nach Anspruch 1, **dadurch gekennzeichnet, dass** das Zugriffssystem weiterhin Folgendes umfasst:
- einen Applikationsselektor (210), der einem Benutzer die Möglichkeit bietet, ein oder mehrere Applikationsprogramme (213) zu selektieren, die durchgeführt werden müssen um die Bildung des Ausgangsarbeitsraums zu ermöglichen.

3. Zugriffssystem nach Anspruch 1 oder 2, **dadurch gekennzeichnet, dass** das Zugriffssystem weiterhin Folgendes umfasst:
- einen Kontextaufbereiter (250), der dem Benutzer die Möglichkeit bietet, einen oder mehrere Kontexte (235) der vielen Kontexte (232) zu erzeugen.

4. Zugriffssystem nach Anspruch 2, **dadurch gekennzeichnet, dass** das Zugriffssystem weiterhin einen Applikationswerfer (240) aufweist, der die Durchführung des einen Applikationsprogramms oder mehrerer Applikationsprogramme (213) auslöst.

5. Zugriffssystem nach Anspruch 4, **dadurch gekennzeichnet, dass** die vielen Kontexte (232) einen Windows^{(R)} Kontext aufweist und der Applikationswerfer (240) die Durchführung des einen Applikationsprogramms oder mehrerer Applikationsprogramme (213) **dadurch** effektuiert, dass dem einen oder mehreren Applikationsprogrammen (213) Bezugszeichen in eine Startmappe hinzugefügt werden, auf die zugegriffen wird, wenn ein Windows^{(R)} Arbeitsraum gebildet wird (460).

6. Zugriffssystem nach Anspruch 1, **dadurch gekennzeichnet, dass** die Identifikationsinformation (104, 106) einen Benutzernamen (104) und ein assoziiertes Kennwort (106) umfasst.

7. Verfahren zur Steuerung des Zugriffs auf ein Computersystem (280), wobei dieses Verfahren die nachfolgenden Verfahrensschritte umfasst:
- das Eingeben (310, 330, 334) von Identifikationsinformation (104, 106) und
- das Schaffen (340, 350) von Zugriff auf das Computersystem (280), und zwar auf Basis der Identifikationsinformation (104, 106),
**dadurch gekennzeichnet, dass** das Verfahren weiterhin die nachfolgenden Verfahrensschritte umfasst:
- vor dem genannten Verfahrensschritt (340, 350) das Selektieren (320, 336) eines selektierten Kontextes oder mehrerer selektierter Kontexte (223) aus eine Anzahl Kontexte (232), und
- nach dem genannten Verfahrensschritt (340, 350) das Bilden (370) eines Ausgangsarbeitsraums (236) auf Basis des einen selektierten Kontextes oder mehrerer selektierter Kontexte (223).

8. Verfahren nach Anspruch 7, **dadurch gekennzeichnet, dass** das Verfahren weiterhin die nachfolgenden Verfahrensschritte umfasst:
- das Selektieren (330, 338) eines oder mehrerer Applikationsprogramme (213), die durchgeführt werden müssen um die Bildung des Ausgangsarbeitsraums (236) zu ermöglichen, und
- das Durchführen (380) jedes Programms des selektierten einen oder der selektierten mehreren Applikationsprogramme (213).

9. Verfahren nach Anspruch 8, **dadurch gekennzeichnet, dass** die Anzahl Kontexte (232) einen Windows^{(R)} Kontext umfasst und dass der Verfahrensschritt der Durchführung (380) jedes Programms des selektierten einen oder der selektierten mehreren Applikationsprogramme (213) den Schritt umfasst, dem einem oder mehreren Applikationsprogrammen (213) Bezugszeichen in einer Startmappe zuzufügen (450), auf die zugegriffen werden kann, wenn ein Windows^{(R)} Arbeitsraum gebildet wird.

10. Computerprogrammprodukt (220) für einen Computer (280), wobei dieses Programmprodukt, wenn im Computer angewandt, einem Benutzer die Möglichkeit bietet, Identifikationsinformation zu spezifizieren und Zugriff auf den Computer schafft, und zwar auf Basis der Identifikationsinformation, **dadurch gekennzeichnet, dass** das Computerprogrammprodukt, wenn im Computer betrieben, dem Benutzer die Möglichkeit bietet, vor der Zugriff geboten wird, aus einer Anzahl Kontexte (232) einen oder mehrere selektierte Kontexte (223) zu selektieren und nachdem der Zugriff geboten wird, einen Ausgangsarbeitsraum schafft, und zwar auf Basis des einen selektierten Kontextes oder auf Basis mehrerer selektierter Kontexte (223).

## Revendications

1. Système d'accès pour accéder à un système informatique (280) et comprenant :
- un écran de connexion (230) qui permet à l'utilisateur d'entrer des informations d'identification (104, 106);
**caractérisé en ce que** le système d'accès comprend en outre :
- un moyen de sélection de contexte (220) qui permet à un utilisateur de sélectionner un ou plusieurs contextes sélectionnés (223) parmi une pluralité de contextes (232) avant d'accéder audit système informatique, et
- ledit écran de connexion fournissant un accès au système informatique (280) sur la base des informations d'identification (104, 106), après que l'utilisateur a exécuté ledit moyen de sélection de contexte, et
- un moyen de lancement d'espace de travail (260), connecté en fonctionnement au moyen de sélection de contexte (220) et à l'écran de connexion (230), qui établit un espace de travail initial (236) sur le système informatique (280) sur la base du ou des contextes sélectionnés (223).

2. Système d'accès suivant la revendication 1, **caractérisé en ce que** le système d'accès comprend en outre :
- un moyen de sélection d'application (210) qui permet à l'utilisateur de sélectionner un ou plusieurs programmes d'application (213) qui vont être exécutés pour faciliter l'établissement de l'espace de travail initial (236).

3. Système d'accès suivant la revendication 1 ou 2, **caractérisé en ce que** le système d'accès comprend en outre :
- un éditeur de contexte (250) qui permet à l'utilisateur de créer un ou plusieurs contextes (235) parmi la pluralité de contextes (232).

4. Système d'accès suivant la revendication 2, **caractérisé en ce que** le système d'accès comprend en outre un moyen de lancement d'application (240) qui lance l'exécution du ou des programmes d'application (213).

5. Système d'accès suivant la revendication 4, **caractérisé en ce que** la pluralité de contextes (232) inclut un contexte Windows® et le moyen de lancement d'application (240) effectue l'exécution du ou des programmes d'application (213) en plaçant des références au ou aux programmes d'application (213) dans un dossier Démarrage auquel on accède lorsqu'un espace de travail Windows® est établi (460).

6. Système d'accès suivant la revendication 1, **caractérisé en ce que** les informations d'identification (140, 106) incluent un nom d'utilisateur (104) et un mot de passe (106) associé.

7. Procédé permettant de contrôler l'accès à un système informatique (280) et comprenant les étapes suivantes :
- l'entrée (310, 330, 334) d'informations d'identification (104, 106), et
- la fourniture (340, 350) d'un accès au système informatique (280) sur la base des informations d'identification (104, 106) ;
**caractérisé en ce que** le procédé comprend en outre les étapes suivantes :
- avant ladite étape de fourniture (340, 350), la sélection (320, 336) d'un ou de plusieurs contextes sélectionnés (223) parmi une pluralité de contextes (232), et
- après ladite étape de fourniture (340, 350), l'établissement (370) d'un espace de travail initial (236) sur la base du ou des contextes sélectionnés (223).

8. Procédé suivant la revendication 7, **caractérisé en ce que** le procédé comprend en outre les étapes suivantes :
- la sélection (330, 338) d'un ou de plusieurs programmes d'application (213) qui vont être exécutés pour faciliter l'établissement de l'espace de travail initial (236), et
- l'exécution (380) de chacun parmi le ou les programmes d'application sélectionnés (213).

9. Procédé suivant la revendication 8, **caractérisé en ce que** la pluralité de contextes (232) inclut un contexte Windows® et l'étape d'exécution (380) de chacun parmi le ou les programmes d'application sélectionnés (213) comprend l'étape du placement (450) de références au ou aux programmes d'application (213) dans un dossier Démarrage auquel on accède lorsqu'un espace de travail Windows® est établi.

10. Produit à base de programme informatique (220) à exécuter sur un ordinateur (280) qui, lorsqu'il est exécuté sur l'ordinateur, permet à un utilisateur de préciser des informations d'identification et fournit un accès à l'ordinateur sur la base des informations d'identification, **caractérisé en ce que** le produit à base de programme informatique, lorsqu'il est exécuté sur l'ordinateur, permet à l'utilisateur, avant que l'accès ne soit octroyé, de sélectionner un ou plusieurs contextes sélectionnés (223) parmi une pluralité de contextes (232) et, après que l'accès a été octroyé, établit un espace de travail initial sur la base du ou des contextes sélectionnés (223).
